# DEMANDE DE BREVET EUROPEEN

(11) **EP 1 718 067 A1**
(43) Date de publication de la demande: **02.11.2006**
(21) Numéro de dépôt: 06113099.3
(22) Date de dépôt: 25.04.2006
(51) Int. Cl.: H04N 5/33

(54) **Procedé et systeme de veille aéroportée par analyse d'images infrarouges**

(30) Priorité: 28.04.2005 FR 0504284
(71) Demandeur: SAGEM Défense Sécurité, 75015 Paris (FR)
(72) Inventeur: Knecht, Pierre, 95000 Cergy (FR)
(74) Mandataire: Callon de Lamarck, Jean-Robert

(57) **Abrégé**

L'invention concerne un procédé de veille aéroporté selon lequel on reléve des images de l'environnement au moyen d'au moins un capteur infrarouge et on analyse ces images pour discriminer les objets détectés sur celle-ci, selon lequel, le capteur étant un capteur matriciel, on met en oeuvre une détection dans au moins trois bandes spectrales, et on dicrimine les objets détectés en fonction des intesités des objetes détectés dans ces différentes bandes. Il est également proposé un système mettant en oeuvre ce procédé.

## Description

La présente invention est relative aux procédés et systèmes de veille aéroportée pour détecter l'éventuelle présence de missiles sol-air ou air-air, et déclencher le cas échéant une contre-mesure.

On sait que les missiles sol-air ou air-air utilisent classiquement deux grandes techniques de guidage :
- les techniques de guidage électromagnétiques, par radar et écartométrie sur une cible désignée ;
- les techniques de guidage par infrarouge, avec écartométrie sur une source de chaleur désignée.

De leur côté, les systèmes de veille aéroportés utilisent également :
- soit des techniques électromagnétiques, le largage des contre-mesures étant par exemple déclenché lorsque les impulsions de la ptate-forme de tir ou du radar de missile sont détectées ;
- soit des techniques passives de détection par voie infrarouge ou ultra-violet selon lesquelles on cherche généralement à détecter le jet du missile.

Les performances d'un système de veille s'apprécient classiquement en fonction de trois critères : le taux de fausses alarmes (TFA), la probabilité de détection de la menace (PD) et le temps de réaction ou temps avant impact (TTI).

### PRESENTATION DE L'INVENTION

Il est souhaité aujourd'hui - dans le cadre d'applications à des besoins militaires comme dans le cadre d'applications à des besoins civils (avions de lignes ou hélicoptères, c'est-à-dire de façon générale, des aéronefs peu maniables) - d'augmenter fortement les performances des systèmes de veille.

La difficulté principale est en particulier d'obtenir une augmentation très sensible des performances et ce pour chacun des trois critères précités.

Par ailleurs, on souhaite également des performances importantes en termes de couverture angulaire.

A cet effet, l'invention propose un procédé de veille aéroporté selon lequel on relève des images de l'environnement au moyen d'au moins un capteur infrarouge et on analyse ces images pour discriminer les objets détectés sur celles-ci, selon lequel, le capteur étant un capteur matriciel, on met en oeuvre une détection dans au moins trois bandes spectrales, et on discrimine les objets détectés notamment en fonction des intensités des objets détectés dans ces différentes bandes.

Notamment, on discrimine les objets détectés en fonction des rapports des intensités entre ces différentes bandes.

Plus précisément, au moins deux rapports sont déterminés,
- l'un qui pour un type d'objet donné est sensiblement invariant et est caractéristique de ce type d'objet,
- l'autre qui varie en fonction des caractéristiques de l'atmosphère séparant l'objet détecté du capteur, par exemple en fonction de la distance.
et on discrimine les objets détectés en fonction de ces deux rapports ou de leurs évolutions dans le temps.

Ainsi, la discrimination entre les objets menaçants et les autres objets de l'environnement est réalisée en mettant en oeuvre des critères qui sont « orthogonaux », c'est-à-dire indépendants entre eux, que cela soit dans les espaces de perception spectral, temporel ou spatial.

Il en résulte un taux de détection et un taux de fausses alarmes considérablement améliorés, avec un traitement particulièrement simple et non consommateur en temps de calcul, autorisant par conséquent des temps de réaction très courts.

L'invention propose également un système de veille aéroporté comportant des moyens formant capteur de détection infrarouge, des moyens de filtrage, ainsi que des moyens de traitement, dans lequel les moyens de filtrage comportent des moyens pour réaliser un filtrage selon au moins trois bandes, les moyens de traitement étant aptes à mettre en oeuvre le procédé selon l'invention.

### PRESENTATION DES FIGURES

D'autres caractéristiques et avantages de l'invention ressortiront encore de la description qui suit, laquelle est purement illustrative et non limitative, et doit être lue en regard des dessins annexés, sur lesquels :
- la figure 1 illustre de façon générale les différents composants d'un système de veille selon l'invention ;
- la figure 2 illustre un mode de mise en oeuvre d'analyse spectrale ; et
- la figure 3 illustre quant à elle un exemple d'architecture du module de traitement.

### DESCRIPTION D'UN OU PLUSIEURS MODES DE REALISATION ET DE MISES EN OEUVRE

### Architecture générale

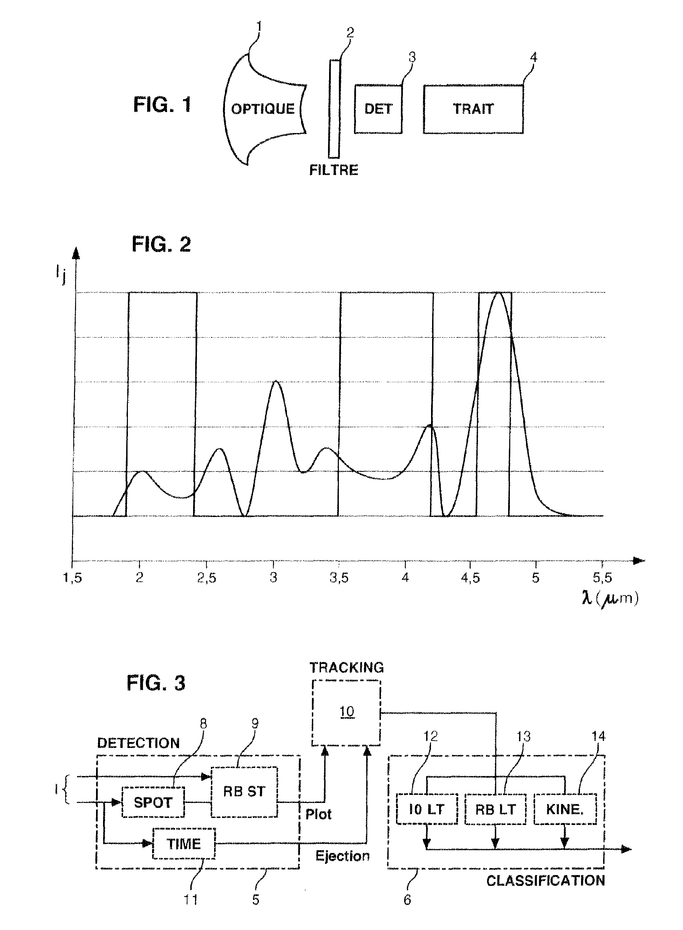

Le système illustré sur la figure 1 comporte, outre une optique 1 et des moyens de filtrage 2, des moyens de détection 3 et un bloc de traitement 4.

La partie de détection 3 comprend en particulier un capteur qui est constitué par une matrice de détecteurs multibandes

Le bloc de traitement 4 peut se décomposer en deux types de moyens de traitements qui sont détaillés sur la figure 3 : un module de détection 5 et un module de traitements de classification 6.

Le module de traitements de détection 5 isole des objets qui sont susceptibles de correspondre à des menaces.

Le module de traitements de classification 6 met en oeuvre différents critères qui permettent de discriminer les objets menaçants par rapport aux autres objets de l'environnement, de façon à limiter les fausses alertes.

On cherche en particulier à discriminer les objets menaçants par rapport aux reflets du soleil sur diverses surfaces ou nuages, par rapport aux combustions ou par rapport aux bâtiments au sol, etc.

Le traitement de discrimination du bloc de traitement 4 met notamment en oeuvre une analyse de type spectral, une analyse temporelle et une analyse spatiale.

La Figure 3 illustre schématiquement les moyens de traitement qui peuvent être utilisés à cet effet dans le bloc de traitement 4.

Ces moyens comportent en particulier un module de détection 5 et un module de classification 6.

Le module de détection 5 reçoit l'image 1 issue du capteur matriciel 3.

Il met en oeuvre sur l'image I un traitement de détection des objets et définit autour de ceux-ci une zone d'observation (module 8 « SPOT »).

Il met également en oeuvre sur cette image I, et en fonction de la zone d'observation ainsi définie, un traitement qui élimine les objets qui n'auraient pas des caractéristiques spectrales pertinentes (module 9 « RB ST »).

Le traitement temporel mis en oeuvre par un module 11 est destiné à permettre d'identifier avec une probabilité de détection forte les signaux transitoires et notamment les signaux de type « éjection » ou « initialisation ».

A la suite de ce traitement de détection court terme, les objets ainsi construits sont envoyés à un module 10 de pistage, qui alimente le module de classification 6.

Les objets sont associés spatio temporellement dans le module de pistage 10 et sont ensuite traités dans le module de classification 6 pour, en fonction du comportement Long Terme (modules 12 et 13 « IO LT » et « RB LT ») ou des informations relatives à la cinématique de l'objet détecté (module 14 « KINE »), en déduire - en combinaison avec les informations d'analyse spectrale et d'analyse spatiale - le caractère menaçant ou non de l'objet détecté, et le cas échéant le type de missile auquel il correspond.

Plus précisément, les traitements long terme mis en oeuvre dans les modules 12 à 14 analysent l'évolution des caractéristiques de type "radiométrie" dans les bandes de fréquences, rapports de bandes, évolutions cinématiques apparentes de l'engin.

Le détecteur est par exemple cadencé à une fréquence supérieure à 100 Hertz.

### Analyse spectrale

On a représenté schématiquement sur la figure 2 le spectre d'émission d'une combustion.

On sait classiquement qu'une combustion dans l'atmosphère se traduit par un spectre avec un certain nombre de pics d'émission.

La figure 2 illustre schématiquement l'intensité Ij d'un jet du missile.

Dans les faits, on a constaté que certaines bandes du spectre de combustion étaient telles que le rapport des intensités détectées dans ces bandes était indépendant de la distance entre la combustion et la détection et constituait une signature propre à chaque type de missile.

Il en est ainsi du rapport des intensités entre les deux bandes précitées. Ceci est d'autant plus vrai que l'utilisation de rapports permet de s'affranchir des effets de présentation de la plume du missile par rapport au capteur.

Par ailleurs, il a également constaté que certaines longueurs d'ondes du spectre d'émission absorbaient plus le signal en fonction de la distance de propagation dans l'atmosphère. Le rapport entre l'intensité dans la bande entre 3,5 et 4,2 micromètres et l'intensité dans la bande comprise entre 4,55 et 4,8 micromètres varie ainsi fortement en fonction de la distance entre la combustion et le détecteur.

Cette propriété est avantageusement utilisée pour discriminer les objets menaçants, correspondant à une combustion se rapprochant rapidement du détecteur, par rapport à des objets qui soit ne correspondraient pas à des combustions (reflets solaires sur les surfaces de l'eau ou sur les nuages), soit ne se rapprocheraient pas rapidement du détecteur.

De façon plus générale, il est proposé une observation dans au moins trois bandes et une discrimination entre les objets menaçants et les autres objets en fonction notamment de l'évolution dans le temps des rapports des intensités dans ces bandes.

Dans l'exemple illustré sur la figure 2, ces trois bandes sont les bandes entre 1,9 et 2,4 micromètres, entre 3,5 et 4,2 micromètres et entre 4,55 et 4,8 micromètres (bandes délimitées en créneaux sur la figure 2). Ces valeurs s'entendent à +/- 0,1 micromètres.

Pour un type de missile donné, le rapport des éclairements entre la première et la deuxième bande est normalement constant et constitue une signature de l'engin menaçant.

Dans le cas où il s'agit effectivement d'un engin menaçant, le rapport des éclairements entre la troisième bande et la deuxième bande doit évoluer en étant croissant de façon monotone.

Là encore, l'utilisation de rapports permet de s'affranchir des effets de présentation de la plume du missile par rapport au capteur.

L'évolution de ce rapport est analysée par les moyens 4 formant bloc de traitement pour discriminer les objets menaçants par rapport aux autres objets. L'utilisation de ces rapports spectraux permet d'appréhender deux axes de perception orthogonaux.

Dans la pratique, ainsi qu'illustré sur la figure 1, on utilise une seule voie de détection, les moyens de filtrage 2 comportant une insertion de pièces optiques qui permet de sélectionner les bandes pertinentes.

Les pièces optiques peuvent ainsi comporter par exemple une roue porte-filtre synchronisée avec le détecteur matriciel 3, d'autres systèmes à base de miroirs orientables sont envisageables.

### Analyse temporelle

Le bloc de traitement 4 met également en oeuvre une détection temporelle 11.

Certains missiles émis au sol ont en effet une phase de mise en route du propulseur qui est temporisée par rapport à l'éjection elle-même.

Il en résulte des pics transitoires d'intensité de combustion que le bloc de traitement est susceptible de détecter en analysant sur les images les objets hautement transitoires, en même temps que les objets à variation lente.

De façon plus générale, les événements transitoires qui sont susceptibles d'être détectés sont par exemple, outre les créneaux d'éjection des « MANPADS », l'initialisation du moteur qui assure l'accélération, des extinctions et changement de régime des propulseurs, etc.

Les phases de propulsion en régime stable se traduisent quant à elles sur les images par des objets à variations lentes dans le temps (signal à segments linéaires ou absence de signal).

On a donc isolé les comportements dans deux mailles d'analyse temporelles orthogonales.

### Analyse spatiale

Le bloc de traitement 4 met également en oeuvre une analyse spatiale mise en oeuvre par le module 8.

On fait en effet l'hypothèse que les sources recherchées sont de type ponctuel.

Toutefois, ces sources ou « objets » sont souvent noyés dans un bruit important.

Le module de détection 8 met avantageusement en oeuvre sur les images un traitement de recalage d'images et de cumul des trames d'images. On extrait ainsi une sensibilité et une précision de mesure supérieures.

Avantageusement également, il est possible d'adjoindre au capteur de veille grand champ une contre-mesure de type laser orienté (DIRCM). Les systèmes DIRCM utilisent généralement une caméra à grande résolution pour faire une localisation fine sur la menace.

Il est proposé d'analyser l'imagerie résolue de cette caméra supplémentaire pour fournir des critères de classification supplémentaires basés sur la géométrie de la source. Ceci permet d'avoir des mailles d'analyse spatiales orthogonales.

## Revendications

1. Procédé de veille aéroporté selon lequel on relève des images de l'environnement au moyen d'au moins un capteur (3) infrarouge et on analyse ces images pour discriminer les objets détectés sur celles-ci, **caractérisé en ce que**, le capteur (3) étant un capteur matriciel, on met en oeuvre une détection dans au moins trois bandes spectrales, et on discrimine les objets détectés.

2. Procédé selon la revendication 1, **caractérisé en ce qu'**on discrimine les objets détectés en fonction des intensités des objets détectés dans ces différentes bandes.

3. Procédé selon l'une des revendications précédentes, **caractérisé en ce qu'**on discrimine les objets détectés en fonction des rapports des intensités entre ces différentes bandes.

4. Procédé selon l'une des revendications précédentes, **caractérisée en ce qu'**on détermine au moins deux rapports,
- l'un qui pour un type d'objet donné est sensiblement invariant et est caractéristique de ce type d'objet,
- l'autre qui varie en fonction des caractéristiques de l'atmosphère séparant l'objet détecté du capteur,
et on discrimine les objets détectés en fonction de ces deux rapports ou de leurs évolutions dans le temps.

5. Procédé selon l'une des revendications précédentes, **caractérisé en ce que** les bandes spectrales analysées sont comprises entre 1,9 et 2,4 micromètres, entre 3,5 et 4,2 micromètres et entre 4,55 et 4,8 micromètres, ces valeurs s'entendant à +/- 0,1 micromètres.

6. Procédé selon l'une des revendications précédentes, **caractérisé en ce que** le traitement de discrimination met en oeuvre une analyse temporelle sur les intensités des objets détectés.

7. Procédé selon la revendication précédente, **caractérisé en ce que** le traitement de discrimination met en oeuvre une détection de signaux transitoires sur les intensités des objets détectés.

8. Procédé selon l'une des revendications 6 ou 7, **caractérisé en ce que** le traitement de discrimination met en oeuvre une détection des signaux stables sur les intensités des objets détectés.

9. Procédé selon l'une des revendications précédentes, **caractérisé en ce qu'**on met en oeuvre un traitement de recalage et de cumul d'images pour améliorer la sensibilité et la précision de mesure.

10. Procédé selon l'une des revendications précédentes, **caractérisé en ce que** la veille étant associée à des moyens de contre-mesure à laser orienté, on complète l'analyse des images relevées par le capteur infra-rouge par une analyse des images relevées par la caméra du système de contre-mesure.

11. Système de veille aéroporté comportant des moyens (3) formant capteur de détection infrarouge, des moyens (2) de filtrage, ainsi que des moyens (4) de traitement, **caractérisé en ce que** les moyens (2) de filtrage comportant des moyens pour réaliser un filtrage selon au moins trois bandes, les moyens de traitement étant aptes à mettre en oeuvre le procédé selon l'une des revendications précédentes.

12. Système selon la revendication 11, **caractérisé en ce que** les moyens de filtrage comportent une roue porte-filtre synchronisée avec les moyens de détection.
